# EUROPÄISCHE PATENTSCHRIFT

(11) **EP 3 329 566 B1**
(45) Veröffentlichungstag und Bekanntmachung des Hinweises auf die Patenterteilung: **15.03.2023**
(21) Anmeldenummer: 16735654.2
(22) Anmeldetag: 05.07.2016
(51) Int. Cl.: H02G 3/08, H02G 3/22, H02G 15/013, H01B 17/30, H02G 3/06, H02B 1/30

(54) **EXPLOSIONSGESCHÜTZTE ANORDNUNG UND VERFAHREN ZU DEREN HERSTELLUNG**
EXPLOSION-PROOF ASSEMBLY AND METHOD FOR PRODUCING SAME
DISPOSITIF ANTIDÉFLAGRANT ET PROCÉDÉ DE FABRICATION DE CELUI-CI

(30) Priorität: 28.07.2015 DE 102015112287
(43) Veröffentlichungstag der Anmeldung: 06.06.2018
(73) Patentinhaber: R. STAHL Schaltgeräte GmbH, 74638 Waldenburg (DE)
(72) Erfinder: KUTSCH, Maxim, 74081 Heilbronn (DE); ROLL, Fabian, 74547 Untermünkheim (DE)
(74) Vertreter: Rüger Abel Patentanwälte PartGmbB
(86) Internationale Anmeldenummer: PCT/EP2016/065819
(87) Internationale Veröffentlichungsnummer: WO 2017/016819

(56) Entgegenhaltungen:
- EP-A1- 1 841 032
- EP-A1- 2 784 880
- EP-A2- 0 309 895
- WO-A1-2013/185979
- WO-A1-2015/106996
- DE-A1-102004 063 083
- DE-A1-102012 111 270

## Beschreibung

Die Erfindung betrifft eine explosionsgeschützte Anordnung sowie ein Verfahren zu deren Herstellung. Die explosionsgeschützte Anordnung dient dazu, eine Leitungseinrichtung mit wenigstens einem elektrischen und/oder optischen Leiter explosionsgeschützt durch ein Durchführungsteil zu führen. Das Durchführungsteil kann beispielsweise integraler Bestandteil einer Wand eines explosionsgeschützten Gehäuses sein. Das Durchführungsteil kann aber auch ein Einsatz sein, der wiederum in einer Wand eines explosionsgeschützten Gehäuses angeordnet ist.

Die Leitungseinrichtung kann wenigstens eine elektrische und/oder optische Leitung mit einem oder mehreren Leitern sein. Mehrere elektrische Leiter sind jeweils elektrisch isoliert.

Das Durchführen von Leitern oder Leitungen aus einer explosionsgefährdeten Atmosphäre in einen explosionsgeschützten Raum, z.B. innerhalb eines explosionsgeschützten Gehäuses, ist aufwendig. Es muss dabei sichergestellt werden, dass kein Zünddurchschlag aus dem explosionsgeschützten Raum nach außen in die explosionsgefährdete Atmosphäre gelangen kann.

Aus DE 10 2012 111 270 A1 ist bereits eine explosionsgeschützte Anordnung für mehradrige Kabel gemäß dem Oberbegriff des Patentanspruches 1 bekannt. Die explosionsgeschützte Anordnung weist eine Kabelverbindungseinrichtung mit einer Außenhülse und einer Innenhülse auf. Die Hülsen sind koaxial zueinander angeordnet und das Kabel ist durch die Innenhülse geführt. Die Außenhülse weist einen Krimpabschnitt auf. Dieser besteht aus plastisch verformbarem Material. Die Innenhülse ist elastisch verformbar. Durch das Verformen des Krimpabschnitts der Außenhülse wird eine elastische Verformung der zwischen dem Kabel und der Außenhülse angeordneten Innenhülse erreicht. Da die Kabelummantelung und die Innenhülse aus elastisch verformbarem Material bestehen, wird ein plastischer Materialfluss der Innenhülse und der Kabelummantelung vermieden, so dass kein Setzen des Materials über einen längeren Zeitraum erfolgen kann. Dadurch wird das Anordnen des Kabels in der Kabelverbindungseinrichtung mit zünddurchschlagssicheren Spalten sichergestellt.

Zusätzlicher Stand der Technik ist in WO 2013/185979 A1 zu finden, wo eine Durchführungsvorrichtung derart ausgestaltet ist, dass sich ein elektrisch leitendes Bauteil (z.B. Sammelschiene) relativ zum Gehäuse axial verschieben kann.

Ausgehend von diesem Stand der Technik kann es als eine Aufgabe der vorliegenden Erfindung angesehen werden, das Herstellen einer explosionsgeschützten Anordnung zur Durchführung einer Leitungseinrichtung mit wenigstens einem Leiter weiter zu vereinfachen.

Diese Aufgabe wird durch eine explosionsgeschützte Anordnung mit den Merkmalen des Patentanspruches 1 sowie ein Verfahren mit den Merkmalen des Patentanspruches 17 gelöst.

Die erfindungsgemäße explosionsgeschützte Anordnung weist wenigstens ein Durchführungsteil, wenigstens einen Verbindungskörper sowie wenigstens eine Leitungseinrichtung mit wenigstens einem elektrischen Leiter und/oder wenigstens einem optischen Leiter auf. Die Leitungseinrichtung kann zumindest in einem Anbringungsabschnitt eine vorzugsweise elektrisch isolierende Ummantelung aufweisen. Die Leitungseinrichtung kann eine Leitung mit einem oder mehreren isolierten elektrischen Leitern und/oder wenigstens einem optischen Leiter sein. Sie durch eine einzige Leitung oder mehrere separate Leitungen oder ein Kabel mit mehreren Leitungen bzw. Adern gebildet sein. Der wenigstens eine Leiter kann aus einem einzigen Draht oder aus mehreren Einzeldrähten (Litze) oder einer optischen Faser oder einem optischen Faserbündel gebildet sein. Der wenigstens eine Leiter kann auch durch eine Schiene bzw. einen Stift oder Bolzen gebildet sein.

In dem wenigstens einen Durchführungsteil sind mehrere Durchführungsöffnungen vorhanden. Jede Durchführungsöffnung erstreckt sich in einer Längsrichtung vollständig durch das Durchführungsteil und wird durch eine Durchführungsfläche begrenzt. Die Längsrichtung bezieht sich jeweils auf eine einzige Durchführungsöffnung. Bevorzugt erstrecken sich alle vorhandenen Durchführungsöffnungen parallel zueinander durch das Durchführungsteil, sodass ihre Längsrichtungen parallel zueinander ausgerichtet sind.

Für jede durch das Durchführungsteil bzw. eine der vorhandenen Durchführungsöffnungen durchzuführende Leitungseinrichtung ist ein Verbindungskörper vorhanden. Jeder Verbindungskörper ist in dem Anbringungsabschnitt zünddurchschlagsicher mit der Leitungseinrichtung verbunden. Diese zünddurchschlagsichere Verbindung kann kraftschlüssig und/oder stoffschlüssig und/oder formschlüssig sein. Zum Beispiel kann der Verbindungskörper auf den Anbringungsabschnitt aufgesteckt und durch eine Umformkraft plastisch umgeformt werden, wodurch die zünddurchschlagsichere Verbindung entsteht. Es ist auch möglich, den Verbindungskörper auf dem Anbringungsabschnitt anzuformen. Dabei kann der Verbindungskörper hergestellt und gleichzeitig Stoff schlüssig mit der Leitungseinrichtung im Anbringungsabschnitt verbunden werden.

Die Leitungseinrichtung kann zumindest im Anbringungsabschnitt eine elektrisch isolierende Ummantelung aufweisen, wenn der Verbindungskörper aus elektrisch leitfähigem Material besteht und wenn wenigstens ein elektrischer Leiter vorhanden ist.

Jeder Verbindungskörper hat oder bildet beim Anbringen an den Anbringungsabschnitt wenigstens einen sich in Längsrichtung durch den Verbindungskörper erstreckenden Leitungskanal. Durch jeden Leitungskanal eines Führungskörpers erstreckt sich jeweils eine Leitung oder eine Ader oder wenigstens ein elektrischer bzw. optischer Leiter der Leitungseinrichtung. Im Anbringungsabschnitt kann der jeweils durchgeführte Leiter durch seine Ummantelung umschlossen und gegebenenfalls elektrisch isoliert sein. Beispielsweise kann durch jeden Leitungskanal genau ein Leiter mit einer optionalen Ummantelung geführt sein.

Die dem Anbringungsabschnitt der Leitungseinrichtung abgewandte Außenfläche jedes Verbindungskörpers weist eine erste Begrenzungsfläche auf oder bildet die erste Begrenzungsfläche. Die Durchführungsfläche jeder Durchführungsöffnung weist eine zweite Begrenzungsfläche auf oder bildet die zweite Begrenzungsfläche. Jeder Verbindungskörper ist in einer zugeordneten Durchführungsöffnung derart angeordnet, dass seine erste Begrenzungsfläche und die zugeordnete zweite Begrenzungsfläche einen zünddurchschlagsicheren Ex-Spalt bilden. Die Außenabmessungen der ersten Begrenzungsfläche sind an die Innenabmessungen der Durchführungsfläche angepasst, so dass sich durch das Anordnen des Verbindungskörpers bzw. dessen Verformungsabschnitts in der Durchführungsöffnung und insbesondere durch Einstecken des Verbindungskörpers in Längsrichtung in die Durchführungsöffnung der zünddurchschlagsichere Ex-Spalt bildet. Diese Anordnung kann sehr einfach, kostengünstig und schnell hergestellt werden.

Der Ex-Spalt ist gewindelos und als Luftspalt ausgeführt.

Wenigstens eine Sicherungseinrichtung ist vorhanden, die dazu eingerichtet ist, den jeweils zugeordneten Verbindungskörper an dem Durchführungsteil in Längsrichtung gegen eine ungewollte Relativbewegung zu sichern. Die dabei zwischen dem wenigstens einen Verbindungskörper und dem zugeordneten Durchführungsteil hergestellte Verbindung ist lösbar, nicht stoffschlüssig und gewindelos ausgeführt. Insbesondere wird dadurch sichergestellt, dass die erste Begrenzungsfläche die Durchführungsöffnung nicht verlässt, so dass die Länge des Ex-Spalts in Längsrichtung erhalten bleibt. Die Sicherungseinrichtung ist vorzugsweise dazu eingerichtet, dass die Verbindung zwischen dem wenigstens einen Verbindungskörper und dem zugeordneten Durchführungsteil durch eine Relativbewegung zwischen dem Verbindungskörper und dem Durchführungsteil in Längsrichtung hergestellt werden kann. Vorzugsweise ist dabei keine Drehbewegung in Umfangsrichtung um die Längsrichtung notwendig, sondern eine einfache Steckbewegung in Längsrichtung reicht aus.

Sämtliche vorhandenen Durchführungsöffnungen des Durchführungsteils sind zünddurchschlagssicher ausgeführt. Zumindest in einer der Durchführungsöffnungen ist ein Verbindungskörper angeordnet. In den weiteren Durchführungsöffnungen ist entweder ein Verbindungskörper angeordnet oder die Durchführungsöffnung wird durch ein Verschlussmittel zünddurchschlagssicher verschlossen. Das Verschlussmittel kann die Durchführungsöffnung vollständig schließen oder es können zünddurchschlagsichere Spalte verbleiben. Das Verschlussmittel kann ein Verschlusskörper oder Verschlussstopfen sein, der stoffschlüssig und/oder kraftschlüssig und/oder formschlüssig mit dem Durchführungskörper verbunden ist.

Vorzugsweise ist jeder Verbindungskörper kraftschlüssig und optional formschlüssig mit der Ummantelung der zugeordneten Leitungseinrichtung verbunden, die durch plastisches Umformen eines Verformungsabschnitts des Verbindungskörpers hergestellt ist. Eine stoffschlüssige Verbindung zwischen dem Verbindungskörper und der Leitungseinrichtung ist vorzugsweise nicht vorgesehen. Das plastische Umformen des Verbindungskörpers wird insbesondere durch einen Umformvorgang wie Fließpressen oder Durchdrücken oder Walzen erreicht.

Der wenigstens eine Verbindungskörper besteht kann aus einem Metall enthaltenden Material, insbesondere aus Stahl bzw. einer Stahllegierung. Das Durchgangsteil kann ebenfalls aus einem Metall enthaltenden Material bzw. aus Stahl hergestellt sein. Es kann alternativ auch aus Kunststoff hergestellt sein. Vorzugsweise ist das Durchgangsteil durch ein Gussteil gebildet. Der wenigstens eine Verbindungskörper und/oder das Durchgangsteil sind vorzugsweise jeweils als integrale Bauteile ohne Naht- und Fügestelle hergestellt. Das Durchgangsteil kann integraler Bestandteil eines Gehäuses oder einer Gehäusewand sein.

Es ist vorteilhaft, wenn der Verbindungskörper unmittelbar und zündspaltfrei an der der Leitungseinrichtung bzw. dem elektrischen oder optischen Leiter bzw. der Ummantelung anliegt. Weitere Zwischenschichten zwischen der wenigstens einen Leitungseinrichtung und dem Verbindungskörper sind nicht notwendig.

Durch jeden vorhandenen Leitungskanal wird insbesondere lediglich eine Leitungseinrichtung hindurch geführt. Ein Kabel mit mehreren Leitern kann zur Durchführung vom Außenmantel befreit und die einzelnen Leiter mit Hilfe jeweils eines Verbindungskörpers durch jeweils eine zugeordnete Durchführungsöffnung oder mit Hilfe eines gemeinsamen Verbindungskörpers durch eine gemeinsame Durchführungsöffnung geführt werden. Das Kabel kann auch insgesamt mit seiner die Leiter umgebenden Ummantelung mittels eines einzigen Verbindungskörpers durch eine zugeordnete Durchführungsöffnung geführt werden.

Es ist vorteilhaft, wenn der zünddurchschlagsichere Ex-Spalt als Luftspalt ausgeführt ist. Eine Füllung, beispielsweise durch ein Gussmaterial oder Klebstoff entfällt. Dadurch ist es möglich, die Verbindung zwischen dem Verbindungskörper und dem Durchgangsteil zerstörungsfrei zu trennen.

Es ist außerdem vorteilhaft, wenn die erste Begrenzungsfläche des plastisch umgeformten Verformungsabschnitts und die Durchführungsfläche jeweils als Flächen ohne Vertiefungen und Vorsprünge ausgeführt sind. Die Flächen sind in Längsrichtung und/oder Umfangsrichtung um die Längsrichtung als ebene Flächen ausgeführt. Die beiden Begrenzungsflächen sind gewindefrei. Der sich bei dieser Ausführung ergebende Ex-Spalt hat die Kontur eines in Umfangsrichtung vollständig oder teilweise geschlossenen Ringspalts. Wenn die erste Begrenzungsfläche und die zweite Begrenzungsfläche koaxial zueinander angeordnet sind, ergibt sich ein hohlzylindrischer Ex-Spalt. Benachbart zu dem Ex-Spalt bzw. den Begrenzungsflächen können Nuten oder Vertiefungen vorhanden sein, beispielsweise um Sicherungselemente und/oder Dichtungen aufzunehmen.

Die Querschnittskonturen des Verbindungskörpers bzw. des Verformungsabschnitts sowie der Durchführungsöffnung sind zur Bildung des Ex-Spalts aneinander angepasst. Vorzugsweise sind die Außenabmessungen der ersten Begrenzungsfläche etwas kleiner sind als die Innenabmessungen der Durchführungsfläche, so dass der Verformungsabschnitt bzw. der Verbindungskörper ohne Bildung einer Presspassung einfach in der Durchführungsöffnung angeordnet werden kann. Die Querschnittsformen können dabei im Prinzip beliebig gewählt werden. So können die erste Begrenzungsfläche und die zweite Begrenzungsfläche einen polygonalen, ovalen, elliptischen oder einen anderen beliebigen Querschnitt aufweisen. Es ist bevorzugt, wenn die beiden Begrenzungsflächen jeweils einen kreisrunden Querschnitt aufweisen.

Bei einem Ausführungsbeispiel, bei dem der Verbindungskörper durch plastisches Umformen seines Verformungsabschnitts mit der Leitungseinrichtung verbunden wird, kann es vorteilhaft sein, wenn sich der Verformungsabschnitt im Wesentlichen über die gesamte Länge des Verbindungskörpers in Längsrichtung erstreckt. Darunter ist ein Verformungsabschnitt zu verstehen, dessen Länge in Längsrichtung zumindest 70% oder zumindest 80% oder zumindest 90% der Gesamtlänge des Verbindungskörpers beträgt. Bei einem Ausführungsbeispiel weist der Verbindungskörper zusätzlich zu dem Verformungsabschnitt nur noch an einem oder beiden axialen Enden jeweils ein Axialendabschnitt auf, der beispielsweise jeweils eine Fase bildet. Zur Herstellung der mechanischen Verbindung mit der Leitungsanordnung wird somit im Wesentlichen der gesamte Verbindungskörper plastisch verformt. Beispielsweise kann der Verbindungskörper durch Fließpressen oder Durchdrücken oder Walzen umgeformt und dadurch mechanisch mit der zugeordneten Leitungseinrichtung verbunden werden, was sehr einfach und kostengünstig ist.

Die Sicherungseinrichtung kann eine erste Axialsicherung und eine zweite Axialsicherung aufweisen. Die beiden axialen Sicherungen sind in Längsrichtung mit Abstand zueinander angeordnet. Zumindest ein Längsabschnitt des zu sichernden Verbindungskörpers ist zwischen den beiden Axialsicherungen angeordnet.

Die Sicherungseinrichtung ragt vorzugsweise nicht über die Außenkontur des Durchführungsteils hinaus. Sie kann zum Beispiel im Bereich zwischen den beiden Wandflächen des Durchführungsteils angeordnet sein, an denen die Durchführungsöffnung jeweils ausmündet. Es ist dabei möglich, die Sicherungseinrichtung bzw. die erste Axialsicherung und die zweite Axialsicherung zwischen diesen beiden Wandflächen des Durchführungsteils an der Durchführungsöffnung anzuordnen.

Die erste Axialsicherung/oder die zweite Axialsicherung kann wenigstens ein radial zur Längsachse gegen eine Vorspannkraft bewegbares oder elastisch verformbares Sicherungsteil aufweisen. Dadurch ist es möglich, den Verbindungskörper entlang der Längsachse in die Durchführungsöffnung einzustecken, wobei sich das wenigstens eine Sicherungsteil radial von der Längsachse weg bewegt oder verformt und sich anschließend, nach dem Durchführen des Verbindungskörpers, wieder zur Längsachse hin in seine Ausgangsstellung bewegt oder verformt. Bei dieser Ausführung lässt sich der Ex-Spalt besonders einfach herstellen. Beispielsweise kann eine Axialsicherung einem elastisch verformbaren Sprengring als Sicherungsteil aufweisen.

Es ist ausreichend, wenn eine der beiden axialen Sicherungen wenigstens ein bewegbares oder verformbares Sicherungsteil aufweist. Jeweils andere Axialsicherung an dem entgegengesetzten Ende der Durchführungsöffnung kann einen radial unbeweglichen Axialanschlag am Durchgangsteil aufweisen. Der Verbindungskörper kann durch den unbeweglichen Axialanschlag und das wenigstens eine Sicherungsteil gegen eine ungewollte Relativbewegung in Längsrichtung gegenüber dem Durchgangsteil gesichert sein.

Bei einem anderen Ausführungsbeispiel ist es auch möglich, wenn beide Axialsicherungen jeweils einen radial unbeweglichen Axialanschlag aufweisen.

Vorzugsweise ist der wenigstens eine radial unbewegliche Axialanschlag als integraler Bestandteil des Durchführungsteils ausgeführt.

Es ist außerdem vorteilhaft, wenn der Verbindungskörper an zumindest einem axialen Ende eine Fase aufweist. Die Fase ist vorzugsweise nur an dem axialen Ende vorgesehen, das vor dem Einstecken des Verbindungskörpers in Längsrichtung der Durchführungsöffnung des Durchführungsteils zugeordnet ist. Dadurch lässt sich das radial belegbare bzw. verformbare Sicherungsteil, beispielsweise der Sprengring, beim Einstecken des Verbindungskörpers in die Durchführungsöffnung auseinanderdrücken und ermöglicht ein einfaches und werkzeugloses Einstecken des Verformungsabschnitts bzw. des Verbindungskörpers in die Durchgangsöffnung.

Es ist außerdem vorteilhaft, wenn mehrere miteinander verbundene oder verbindbare Durchführungsteile vorhanden sind. Jedes der Durchführungsteile kann eine oder mehrere Durchführungsöffnungen aufweisen. Die Durchführungsteile können kreisförmig oder ringförmig sein und beispielsweise konzentrisch zueinander angeordnet sein. Dadurch ist es möglich, abhängig von der Anzahl der durchzuführenden Leitungseinrichtungen ein oder mehrere Durchführungsteile miteinander zu verbinden und beispielsweise in einer Gehäusewand einzusetzen. Durch das Verbinden mehrerer Durchführungsteile miteinander ist es ausreichend, in der Gehäusewand lediglich eine Durchbrechung vorzusehen. Die miteinander verbundenen Durchführungsteile nehmen eine sich rechtwinkelig zu der Längsrichtung erstreckende zusammenhängende Fläche vorzugsweise ohne Einschnürungen ein, deren Kontur beispielsweise kreisrund, elliptisch, oval oder polygonal ist.

Bei einer Ausführung eines Durchführungsteils mit mehreren Durchführungsöffnungen ist es ferner vorteilhaft, wenn einige der Durchführungsöffnungen Öffnungsquerschnitte aufweisen, die sich von Öffnungsquerschnitten anderer Durchführungsöffnungen unterscheiden. Beispielsweise können Durchführungsöffnungen mit unterschiedlich großen, vorgegebenen oder standardisierten Öffnungsquerschnitten bzw. Öffnungsdurchmessern vorhanden sein.

Es ist außerdem vorteilhaft, wenn für eine Durchführungsöffnung mit einem vorgegebenen Öffnungsquerschnitt mehrere passende Verbindungskörper, mit einem daran zur Bildung des Ex-Spalts angepassten Außenquerschnitt vorhanden sind, wobei sich der wenigstens eine Leitungskanal eines passenden Verbindungskörpers von dem wenigstens einen Leitungskanal anderer passender Verbindungskörpers unterscheidet. Zum Beispiel können die passenden Verbindungskörper jeweils unterschiedlich viele Leitungskanäle haben und/oder die Leitungskanäle verschiedener passender Verbindungskörper können unterschiedliche Konturen oder Flächeninhalte der Kanalquerschnitte aufweisen. Dadurch können Leitungseinrichtungen unterschiedlicher Art oder mit unterschiedlichem Querschnitt in eine bestimmte Durchführungsöffnung unter Verwendung des jeweils passenden Verbindungskörpers eingesetzt werden.

Durch das Vorsehen von einem oder mehreren Durchführungsteilen mit jeweils mehreren Durchführungsöffnungen unterschiedlicher Größe und/oder das Bereitstellen von mehreren passenden Verbindungskörpern für jede Durchführungsöffnung lässt sich ein Baukastensystem aufbauen, bei dem flexibel eine Vielzahl von Leitungseinrichtungen einfach und schnell durch einen Wandabschnitt explosionsgeschützt hindurch geführt werden können.

Die explosionsgeschützte Anordnung lässt sich wie folgt herstellen:
Zunächst wird wenigstens ein Durchführungsteil mit mehreren Durchführungsöffnungen bereitgestellt. Die Durchführungsöffnungen sind in Umfangsrichtung jeweils von einer Durchführungsfläche begrenzt.

Wenigstens eine Leitungseinrichtung mit jeweils wenigstens einem elektrischen und/oder optischen Leiter und optional einer umschließenden Ummantelung um den wenigstens einen Leiter wird bereitgestellt. Die Ummantelung kann zumindest in einem Anbringungsabschnitt der Leitungseinrichtung vorhanden sein.

Mit jeder Leitungseinrichtung ist jeweils ein Verbindungskörper zünddurchschlagssicher verbunden. Der Verbindungskörper kann kraftschlüssig und/oder formschlüssig und/oder stoffschlüssig mit der Leitungseinrichtung bzw. der Ummantelung in dem Anbringungsabschnitt verbunden sein. Beispielsweise kann der Verbindungskörper in einem Verformungsabschnitt plastisch umgeformt und radial nach innen gegen die Leitungseinrichtung bzw. Ummantelung gedrückt werden, um die kraftschlüssige und/oder formschlüssige Verbindung herzustellen. An seiner dem Anbringungsabschnitt abgewandten Anfangsseite weist der Verbindungskörper eine erste Begrenzungsfläche auf.

Nach dem Herstellen der mechanischen Verbindung zwischen dem Verbindungskörper und der Leitungseinrichtung wird der Verformungsabschnitt oder der gesamte Verbindungskörper in der Durchführungsöffnung angeordnet. Die Durchführungsfläche der Durchführungsöffnung stellt eine zweite Begrenzungsfläche dar, wobei zwischen den beiden Begrenzungsflächen ein zünddurchschlagssicherer Ex-Spalt gebildet ist.

Der Verbindungskörper wird anschließend gegen eine unerwünscht große Relativbewegung gegenüber dem Durchführungsteil in Längsrichtung gesichert.

Das optionale plastische Umformen des Verformungsabschnitts bzw. des Verbindungskörpers erfolgt vorzugsweise durch Fließpressen oder Durchdrücken oder Walzen.

Vorteilhafte Ausgestaltungen der Erfindung ergeben sich aus den abhängigen Patentansprüchen, der Beschreibung und der Zeichnungen. Nachfolgend werden bevorzugte Ausführungsbeispiele anhand der beigefügten Zeichnungen im Einzelnen erläutert. Es zeigen:
Fig. 1 eine schematische Darstellung eines Ausführungsbeispiels einer Leitungseinrichtung,
Fig. 2 eine schematische Darstellung eines Ausführungsbeispiels eines unverformten Verbindungskörpers in seinem Ausgangszustand in Seitenansicht radial zu einer Längsrichtung und in einer Frontalansicht in Längsrichtung,
Fig. 3 eine schematische Prinzipdarstellung des zünddurchschlagsicheren Verbindens des Verbindungskörpers aus Fig. 2 mit der Leitungseinrichtung aus Fig. 1,
Fig. 4a und 4b jeweils eine Werkzeugeinrichtung und ein beispielhaftes Verfahren zur Herstellung einer zünddurchschlagsicheren Verbindung zwischen einem Verbindungskörper und einer Leitungseinrichtung,
Fig. 5 eine Baueinheit aus einem Ausführungsbeispiel eines Verbindungskörpers und einem Ausführungsbeispiel einer Leitungseinrichtung in schematischer Seitenansicht,
Fig. 6 und 7 jeweils eine schematische Prinzipdarstellung eines Ausführungsbeispiels einer explosionsgeschützten Anordnung mit der Baueinheit aus Fig. 5, die in eine Durchführungsöffnung eines Durchführungsteils eingesteckt ist,
Fig. 8 und 9 jeweils eine schematische Prinzipdarstellung von nicht erfindungsgemäßen Ausführungsbeispielen der explosionsgeschützten Anordnung mit einem als Gewindespalt ausgeführten Ex-Spalt,
Fig. 10 eine perspektivische Ansicht eines Ausführungsbeispiels von drei miteinander verbindbaren Durchführungsteilen,
Fig. 11-13 jeweils ein Ausführungsbeispiel einer explosionsgeschützten Anordnung unter Verwendung jeweils eines der Durchführungsteile aus Fig. 10,
Fig. 14 ein Ausführungsbeispiel einer explosionsgeschützten Anordnung mit mehreren miteinander verbundenen Durchführungsteilen aus den Fig. 10-13 in perspektivischer Darstellung und
Fig. 15 eine Draufsicht auf die Durchführungsteile aus Fig. 14, wobei die Leitungseinrichtungen jeweils schematisch im Querschnitt dargestellt sind.

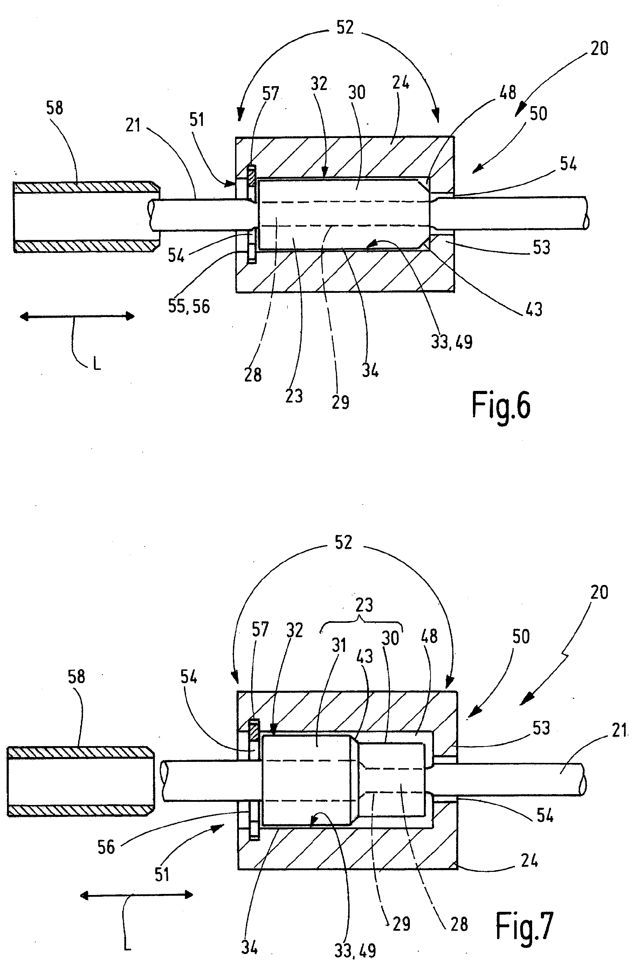

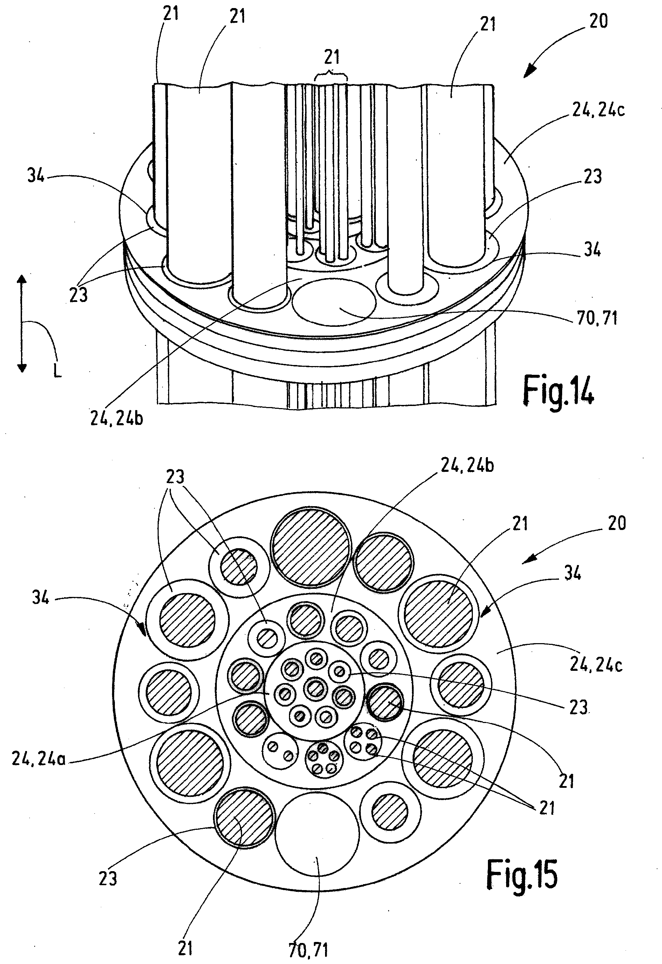

Nachfolgend wird anhand von bevorzugten Ausführungsbeispielen eine explosionsgeschützte Anordnung 20 beschrieben, wie sie beispielsweise in Figuren 6 und 7 oder 11-15 veranschaulicht ist. Die explosionsgeschützte Anordnung 20 weist eine Leitungseinrichtung 21 mit wenigstens einem elektrischen und/oder mit wenigstens einem optischen Leiter 22, wenigstens einen Verbindungskörper 23 sowie wenigstens ein Durchführungsteil 24 auf.

Die explosionsgeschützte Anordnung 20 dient dazu, die Leitungseinrichtung 21 mit dem wenigstens einen elektrischen und/oder mit wenigstens einem optischen Leiter 22 explosionsgeschützt durch eine Wand bzw. einen Wandabschnitt hindurch zu führen, der einen explosionsgeschützten Raum oder Bereich von einer explosionsgefährdeten Atmosphäre trennt. Beispielsweise kann es sich um den Wandabschnitt eines explosionsgeschützten Gehäuses, insbesondere einer druckfesten Kapselung (Ex-d) handeln. Hierfür kann das wenigstens eine Durchführungsteil 24 integraler Bestandteil der Wand sein. Bevorzugt ist es als separates Bauteil zünddurchschlagsicher in der Wand angebracht bzw. anbringbar, durch eine Gewindeverbindung und/oder eine stoffschlüssige Verbindung (Kleben, Schweißen, etc.). Die Außenkontur des separaten Durchführungsteils 24 ist bevorzugt kreisrund.

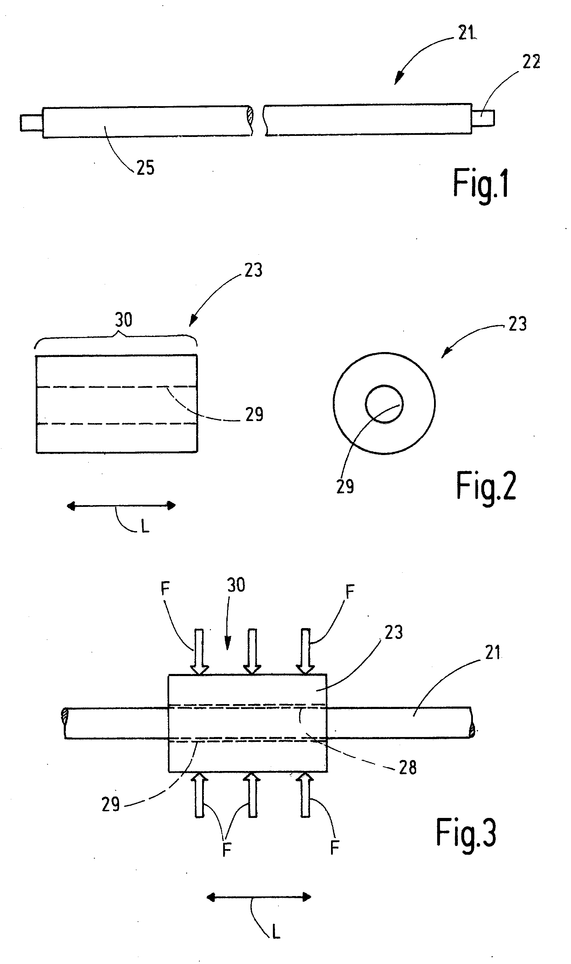

Jede Leitungseinrichtung 21 kann eine Leitung mit einem einzigen elektrischen und/oder optischen Leiter oder mit mehreren elektrischen und/oder optischen Leitern 22 sein (Fig. 1). Ein elektrischer Leiter 22 kann als einstückiger Draht oder aus einer Mehrzahl von Drähten in Form einer Litze ausgeführt sein. Ein optischer Leiter 22 kann als optische Faser oder ein Faserbündel ausgeführt sein. Bei den hier beschriebenen Ausführungsbeispielen ist der wenigstens eine Leiter 22 zumindest abschnittsweise von einer Ummantelung 25 umschlossen, die elektrisch isolierend ausgeführt sein kann. Der wenigstens eine Leiter 22 kann auch durch einen starren Bolzen gebildet sein, der - anders als Leitungen bzw. Kabel - quer zu seiner Erstreckungsrichtung durch die üblicherweise auftretenden Querkräfte nicht flexibel biegbar ist.

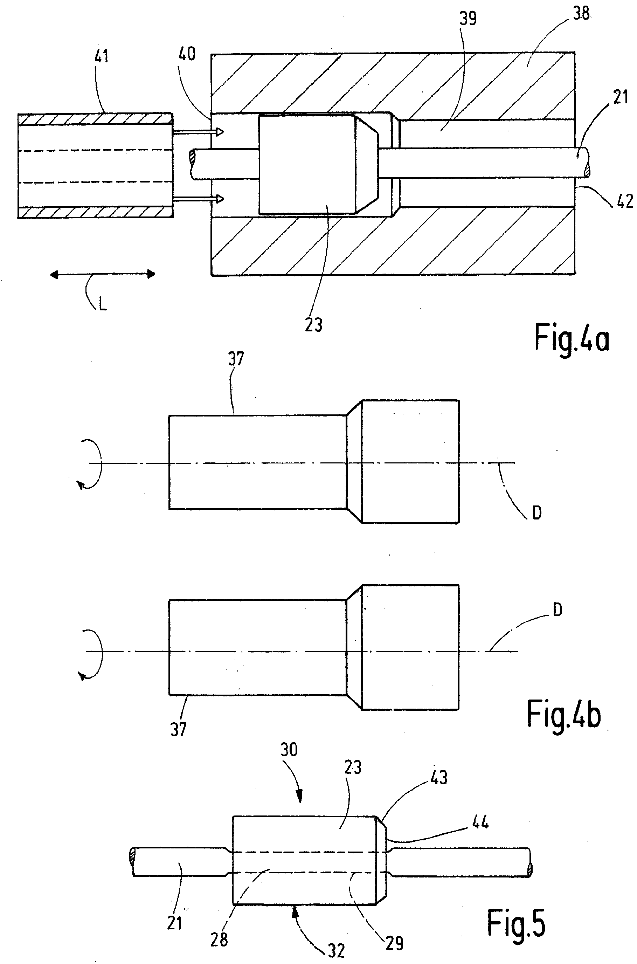

Der Leitungseinrichtung 21 mit dem wenigstens einen Leiter 22 ist jeweils ein Verbindungskörper 23 zugeordnet. Der Verbindungskörper 23 weist wenigstens einen sich in einer Längsrichtung L vollständig durch den Verbindungskörper 23 hindurch erstreckenden Leitungskanal 29 auf. Der Leitungskanal 29 dient dazu, einen Anbringungsabschnitt 28 der zugeordneten Leitungseinrichtung 21 aufzunehmen. Der Verbindungskörper 23 ist zünddurchschlagssicher mit dem Anbringungsabschnitt 28 der Leitungseinrichtung 21 bzw. der Ummantelung 25 verbunden. Die zünddurchschlagsichere Verbindung kann in Längsrichtung L entlang der gesamten Erstreckung des Leitungskanals 29 mit dem Anbringungsabschnitt 28 bestehen (z.B. Fig. 5 und 6). Alternativ hierzu kann auch lediglich ein Abschnitt Leitungskanals 29 zünddurchschlagssicher mit dem Anbringungsabschnitt 28 verbunden sein (z.B. Fig. 7, 8 und 9). Die Ummantelung 25 im Anbringungsabschnitt 28 kann entfallen, wenn der Verbindungskörper 23 gegenüber dem Durchführungsteil 24 elektrisch isolierend ausgeführt ist oder wenn die Leitungseinrichtung keinen elektrischen Leiter aufweist.

Die Leitungseinrichtung 21 wird beispielsgemäß mit ihrem freien Ende in Längsrichtung L in den Leitungskanal 29 eingesteckt und vollständig hindurch geführt (Fig. 3). Die Kontur des Leitungskanals 29 ist an die Außenkontur der Leitungseinrichtung 21 angepasst. Zur Hindurchführung einer Leitung bzw. eines Kabels weist der Leitungskanal 29 beispielsgemäß eine kreisrunde Querschnittskontur auf. Grundsätzlich sind jedoch beliebige andere eckenlose oder Ecken aufweisende Querschnittskonturen realisierbar.

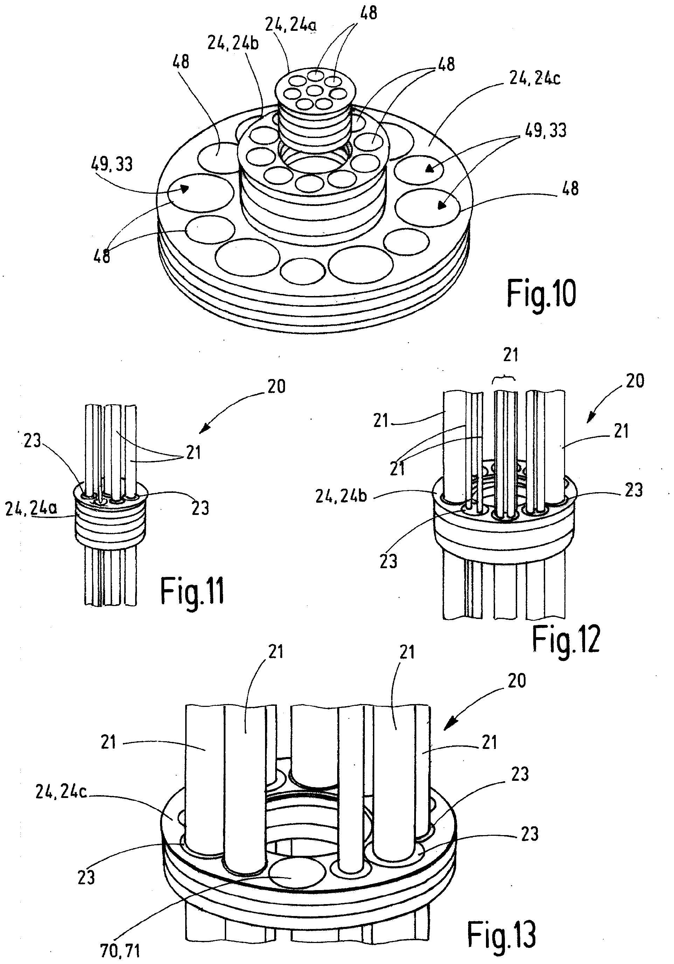

Der Verbindungskörper 23 hat einen Verformungsabschnitt 30. Beim Ausführungsbeispiel gemäß der Figuren 2, 3, 5, 6 und 11-15 erstreckt sich der Verformungsabschnitt 30 im Wesentlichen über die gesamte Länge des Verbindungskörpers 23 in Längsrichtung L. In dem Längsabschnitt des Verbindungskörpers 23, der den Verformungsabschnitt 30 bildet, wird der Verbindungskörper 23 durch Einwirken einer mechanischen Kraft plastisch umgeformt (Fig. 3). Durch diese plastische Umformung verformt sich auch der Leitungskanal 29 im Bereich des Verformungsabschnitts 30 und legt sich zündspaltfrei an den Anbringungsabschnitt 28 der Leitungseinrichtung 21 bzw. einen der Leiter 22 der Leitungseinrichtung 21 an, der optional mit einer Ummantelung 25 versehen sein kann. Es ist möglich, jeden Leiter 22 der Leitungseinrichtung 21 durch einen separaten Leitungskanal 29 des Verbindungskörpers 23 zu führen. Weist eine Leitungseinrichtung 21 jeweils mehrere Leiter 22 auf, so kann der Verbindungskörper 23 entsprechend viele Leitungskanäle 29 aufweisen. Ausführungsbeispiele hierfür sind in den Fig. 11-15 schematisch dargestellt. Sofern es den Explosionsschutzanforderungen genügt, kann auch eine Leitungseinrichtung 21 mehreren Leitern 22, beispielsweise ein Kabel, durch einen Leitungskanal 29 eines Verbindungskörpers 23 geführt sein.

Bei anderen Ausführungsbeispielen ist es auch möglich, dass der Verbindungskörper 23 zusätzlich zu dem Verformungsabschnitt 30 einen Verbindungsabschnitt 31 aufweist (Fig. 7, 8 und 9). Dieser Verbindungsabschnitt 31 wird nicht zur kraftschlüssigen Verbindung mit der Leitungseinrichtung 21 verwendet. Er kann beim plastischen Umformen des Verformungsabschnitts 30 unverformt bleiben.

An dem Verbindungskörper 23 ist zumindest in einem Bereich der dem Anbringungsabschnitt 28 bzw. der Leitungseinrichtung 21 abgewandten Seite eine erste Begrenzungsfläche 32 vorhanden. Erste Begrenzungsfläche 32 kann durch die plastisch umgeformte Außenfläche des Verformungsabschnitts 30 gebildet sein (Fig. 5, 6, 11-15) oder an dem Verbindungsabschnitt 31 vorhanden sein (Fig. 7, 8 und 9).

Gemeinsam begrenzen die erste Begrenzungsfläche 32 am Verbindungskörper 23 und eine mit der ersten Begrenzungsfläche 32 zusammenwirkende zweite Begrenzungsfläche 33 am Durchführungsteil 24 einen zünddurchschlagsicheren Ex-Spalt 34.

In Fig. 4a ist eine Variante veranschaulicht, mittels der der Verformungsabschnitt und im Wesentlichen der gesamte Verbindungskörper 23 durch Umformen mechanisch mit der zugeordneten Leitungseinrichtung 21 verbunden und durch das Umformen die erste Begrenzungsfläche 32 an der Außenfläche des Verformungsabschnitts 30 gebildet werden kann. Bei diesem Ausführungsbeispiel erstreckt sich der Verformungsabschnitt 30 nahezu über die gesamte Länge des Verbindungskörpers.

Das Umformen des Verbindungskörpers 23 erfolgt gemäß Fig. 4a durch Fließpressen oder Durchdrücken und insbesondere durch Vorwärtsfließpressen. Dieser Vorgang ist stark schematisiert in Fig. 4a veranschaulicht. Der Verbindungskörper 23 und die durch den Leitungskanal 29 hindurch geführte Leitungseinrichtung 21, werden in einer Werkzeugform 38 angeordnet. Die Werkzeugform 38 hat hierzu einen Umformkanal 39, dessen Querschnitt an dem einen, ersten Ende 40 an den Außenquerschnitt des noch nicht umgeformten Verformungsabschnitts 30 angepasst ist. Die Abschnittsaußenfläche liegt in Umfangsrichtung mit geringem Spiel an der Innenfläche des Umformkanals 39 an. Mit Hilfe eines Stempels 41 wird der Verbindungskörper 23 entlang des Umformkanals 39 vom ersten Ende 40 weg bewegt. Der Kanalquerschnitt des Umformkanals verjüngt sich, wodurch es zu einem Materialfluss kommt. Die Länge des Verbindungskörpers 23 in Längsrichtung L nimmt zu, während die Querschnittsabmessungen im Verformungsabschnitt 30 abnehmen.

Bei dem hier beschriebenen Ausführungsbeispiel ist die erste Begrenzungsfläche 32 von einer Kreiszylindermantelfläche gebildet (Fig. 5-7). Der Stempel 41 kann zwei konzentrisch zueinander angeordnete Stempelteile aufweisen (Fig. 4a), um den Verbindungskörper 23 vollständig durch die Engstelle im Umformkanal 29 hindurch zu bewegen und beispielsweise auch vollständig in eine einzige Richtung durch den Umformkanal 29 zu drücken. Es ist alternativ hierzu auch möglich, auf der dem ersten Ende 40 entgegengesetzten zweiten Ende 42 des Umformkanals 39 einen Auswerfer vorzusehen, der den plastisch umgeformten Verbindungskörper 23 in Richtung zum ersten Ende 40 zurück und aus der Werkzeugform 38 heraus bewegt.

Das plastische Umformen des Verformungsabschnitts 31 des Verbindungskörpers 23 kann - wie schematisch in Fig. 4b veranschaulicht - auch durch das Walzen des Verformungsabschnitts 31 zwischen zwei Walzwerkzeugen 37 durchgeführt werden. Als Walzwerkzeuge 37 sind in Fig. 4b beispielhaft Walzen veranschaulicht, die sich um eine jeweilige Drehachse D drehen. Durch den Abstand der beiden Drehachsen D kann der Umformgrad des Verformungsabschnitts 31 vorgegeben werden. Alternativ zu der Verwendung von Walzen, könnte der Verformungsabschnitt 30 auch zwischen zwei plattenförmigen Walzwerkzeugen gewalzt werden, deren Abstand den Umformgrad vorgibt und die sich in paralleler Ausrichtung relativ zueinander bewegen, so dass der Verformungsabschnitt 30 zwischen den plattenförmigen Walzwerkzeugen abrollt.

In den Figuren 5, 6 und 7 ist eine Ausführungsform des Verbindungskörpers 23 veranschaulicht, der im Anschluss an die erste Begrenzungsfläche 32 des Verformungsabschnitts 30 eine Fase 43 aufweist. Die Fase 43 schließt sich einerseits unmittelbar an die erste Begrenzungsfläche 32 und andererseits unmittelbar an eine Stirnfläche 44 des Verbindungskörpers 23 (Fig. 5 und 6) oder an einen Abschnitt des Verbindungskörpers 23 mit kleineren Radialabmessungen an (Fig. 7). Die Fase 43 erstreckt sich schräg oder rechtwinklig zur Längsrichtung L und kann eine Kegelstumpfmantelfläche bilden.

Die Stirnfläche 44 ist als ebene Ringfläche ausgeführt und umschließt eine Mündung des Leitungskanals 29. Der Verbindungskörper 23 kann ausschließlich aus zwei Längsabschnitten, nämlich einem durch die Fase 43 gebildeten Axialendabschnitt und dem Verformungsabschnitt 30 mit der zylindermantelflächenförmigen ersten Begrenzungsfläche 32 bestehen. Somit erstreckt sich der Verformungsabschnitt 30 im Wesentlichen über die gesamte Länge des Verbindungskörpers 23. Darunter ist zu verstehen, dass die Länge des Verformungsabschnitts 30 den größten Teil der Gesamtlänge des Verbindungskörpers ausmacht, beispielsweise mindestens 70%, 80% oder 90%, und beispielsgemäß zusätzlich lediglich die Fase 43 vorhanden ist. Wie vorstehend erläutert, kann der Verformungskörper 23 neben dem Verformungsabschnitt 30 auch einen Verbindungsabschnitt 31 aufweisen, wobei die Fase 43 die beiden Abschnitte 30,31 verbinden kann (Fig. 7).

Bei dem hier beschriebenen Ausführungsbeispiel besteht der gesamte Verbindungskörper 23 aus einem plastisch verformbaren Material und ist integral ohne Naht- und Fügestelle hergestellt. In Abwandlung hierzu könnte es bei Ausführungsbeispielen des Verbindungskörpers 23 ausreichen, wenn der Verformungsabschnitt 30 aus einem plastisch verformbaren Material besteht. Der Verbindungskörper 23 ist beispielsgemäß aus einem Metall oder einer Metalllegierung und vorzugsweise aus Stahl hergestellt. Um eine elektrische Verbindung mit einem elektrischen Leiter 22 zu vermeiden, kann die durch die Ummantelung 25 zumindest im Bereich des Leitungskanals 29 eine elektrische Isolierung vorhanden sein.

Wie erläutert, wird durch das plastische Umformen des Verformungsabschnitts 30 eine mechanische und beispielsgemäß kraftschlüssige Verbindung zwischen dem Verbindungskörper 23 und der zugeordneten Leitungseinrichtung 21 hergestellt. Optional kann dabei auch eine formschlüssige Verbindung entstehen, was von der Formgebung der Leitungseinrichtung 21 bzw. der Ummantelung 25 abhängt. Die Ummantelung 25 kann elastisch verformbar sein und beispielsweise aus Kunststoff bestehen. Durch die mechanische, kraft- und/oder formschlüssige Verbindung zwischen dem Verbindungskörper 23 und der Leitungseinrichtung 21 liegt die den Leitungskanal 29 begrenzende Kanalinnenfläche vorzugsweise unmittelbar an der Leitungseinrichtung 21 bzw. deren Ummantelung 25 an. Die Ummantelung 25 ist bevorzugt durch eine einzige Lage gebildet, die den wenigstens einen Leiter 22 umschließt. Kabel können auch von ihrer Kabelummantelung befreit und die Leiter, beispielsweise die isolierten Adern, separat durch jeweils einen Leitungskanal 29 eines betreffenden Verbindungskörpers 23 geführt, sofern dies aus Gründen des Explosionsschutzes erforderlich ist. Abhängig von dem verwendeten Kabel, der Anzahl der Leiter, der Materialien, usw. kann aber ein einziger Verbindungskörper auf der die Adern umschließenden Kabelummantelung angeordnet und damit zünddurchschlagsicher verbunden und durch eine Durchführungsöffnung 48 geführt werden.

Das Durchführungsteil 24 hat mehrere Durchführungsöffnungen 48, die jeweils in Umfangsrichtung um die Längsrichtung L von einer Durchführungsfläche 49 begrenzt wird. Die Durchführungsfläche 49 bildet die zweite Begrenzungsfläche 33 zur Bildung des Ex-Spalts 34. Durch das Anordnen des Verbindungskörpers 23 bzw. des Verformungsabschnitts 30 mit der ersten Begrenzungsfläche 32 in der Durchführungsöffnung 48 mit der Durchführungsfläche 49 begrenzen die einander zugewandten Begrenzungsflächen 32 und 33 den Ex-Spalt 34.

Ein Beispiel für eine solche Anordnung ist in den Fig. 6 und 7 gezeigt. Der Ex-Spalt 34 ist dort als Ringspalt zwischen der ersten Begrenzungsfläche 32 des Verbindungskörpers 23 und der zweiten Begrenzungsfläche 33 der Durchführungsöffnung 48 gebildet. Die erste Begrenzungsfläche 32 und die zweite Begrenzungsfläche 33 sind beispielsgemäß als Längsrichtung L sowie in Umfangsrichtung um die Längsrichtung L ebene Flächen frei von Vorsprüngen und Vertiefungen ausgeführt.

Der Ex-Spalt 34 ist ein Luftspalt. Eine stoffschlüssige Verbindung zwischen dem Verbindungskörper 23 und dem Durchführungsteil 24 besteht nicht.

Zur axialen Sicherung des Verbindungskörpers 23 in der Durchführungsöffnung 48 ist eine Sicherungseinrichtung 52 vorhanden. Die Sicherungseinrichtung 52 weist Ausführungsbeispiel erste Axialsicherung 50 und eine zweite Axialsicherung 51 auf, die in Längsrichtung L mit Abstand zueinander angeordnet sind. Zwischen den beiden axialen Sicherungen 50,51 ist zumindest ein Abschnitt des Verbindungskörpers 23 angeordnet und gegen eine unerwünschte Axialbewegung in Längsrichtung L gesichert. Beispielsgemäß ist zumindest der die erste Begrenzungsfläche 32 aufweisende Teil des Verbindungskörpers 23 zwischen den beiden axialen Sicherungen 50,51 angeordnet (Fig. 6,7).

Die erste Axialsicherung 50 weist einen ersten Anschlag 53 auf, der die Durchführungsöffnung 48 in Längsrichtung L an einem Ende begrenzt und radial nach innen vorsteht. Der erste Anschlag 53 hat ein Loch 54 zur Durchführung der Leitungseinrichtung 21. Die Abmessungen des Loches 54 sind so gewählt, dass der Verbindungskörper 23 nicht hindurch passt und durch den Anschlag 53 in seiner Axialbewegung in Längsrichtung L begrenzt ist.

Auf der dem ersten Anschlag 53 entgegengesetzten Seite ist die Durchführungsöffnung 48 durch einen zweiten Anschlag 55 der zweiten Axialsicherung 51 begrenzt. Der Abstand in Längsrichtung L zwischen den beiden Anschlägen 53, 55 ist mindestens so groß wie die Länge des Verformungsabschnitts 30 des Verbindungskörpers 23. Bei den Ausführungsbeispiel nach Fig. 6 und 7 befindet sich der Verbindungskörper 23 vollständig zwischen den beiden Anschlägen 53, 55. In Abwandlung hierzu könnte zumindest ein Teil des Verbindungskörpers auch über wenigstens einen der beiden Anschläge 53, 55 in Längsrichtung L hinausragen.

Analog zum ersten Anschlag 53 hat auch der zweite Anschlag 55 ein Loch 54 zur Durchführung der zugeordneten Leitungseinrichtung 21. Der zweite Anschlag 55 ist beispielsgemäß durch einen radial zur Längsrichtung L elastisch verformbares bzw. aufweitbares Sicherungsteil 56 und beispielsgemäß einen federelastischen Sprengring gebildet. Der Sprengring ist C-förmig ausgeführt und in Umfangsrichtung um die Längsrichtung L nicht vollständig geschlossen, sondern an einer Stelle geschlitzt, so dass er zum Hindurchführen des Verbindungskörpers 23 aufgeweitet werden kann. In seinem nicht aufgeweiteten Ruhezustand begrenzt er ein Loch 54, dessen Querschnittsabmessung kleiner ist als die des Verbindungskörpers 23 bzw. des Verformungsabschnitts 30, so dass er die Axialbewegung in Längsrichtung L des Verbindungskörpers 23 begrenzen kann. Das von dem Sprengring gebildete Sicherungsteil 56 sitzt in einer Umfangsnut 57 des Durchführungsteils 24, die radial nach innen offen ist. Der Sprengring steht in seinem nicht aufgeweiteten Ausgangszustand radial nach innen aus der Umfangsnut 57 vor. Um den Sprengring aufweiten zu können, sitzt dieser mit Spiel in der Umfangsnut 57.

Alternativ zu dem elastisch verformbaren Sprengring könnte auch wenigstens ein radial zur Längsrichtung L gegen eine Vorspannkraft bewegbares Sicherungsteil 56 vorhanden sein, das in die Durchführungsöffnung 48 hineinragt. Es können auch mehrere solche Sicherungsteile 56 Umfangsrichtung um die Längsrichtung L angeordnet sein.

Bei dieser Ausführung ist das Vorsehen der Fase 43 am Verbindungskörper 23 vorteilhaft. Der minimale Durchmesser der Fase 43 ist kleiner als der Abstand des wenigstens einen Sicherungsteils 56 von der Längsachse durch die Durchführungsöffnung 48 bzw. kleiner als der Innendurchmesser des Sprengrings in seinem Ausgangszustand. Über die Fase 43 kann das wenigstens eine Sicherungsteil 56 bzw. der Sprengring beim Einstecken des Verbindungskörpers 23 in die Durchgangsöffnung 48 radial nach außen bewegt oder elastisch verformt werden und dadurch während des Einsteckens an der Fase 43 entlanggleiten. Ist zumindest der Abschnitt 30 bzw. 31 mit der ersten Begrenzungsfläche 32 oder der gesamte Verbindungskörper 23 eingesteckt, liegt der Sprengring 56 nicht mehr an der ersten Begrenzungsfläche 32 an und nimmt seinen nicht aufgeweiteten Ausgangszustand ein, der in den Fig. 6 und 7 gezeigt ist.

Mit Hilfe einer Hülse 58 oder eines vergleichbaren Werkzeugs kann der Sprengring 56 aufgeweitet und der Verbindungskörper 23 aus der Durchführungsöffnung 48 entnommen werden. Die axiale Bewegungssicherung über die Sicherungseinrichtung 52 ist beispielsgemäß so ausgeführt, dass eine lösbare Bewegungssicherung zwischen dem Verbindungskörper 23 und dem Durchführungsteil 24 zur Begrenzung der Relativbewegung in Längsrichtung L besteht.

Die Sicherungseinrichtung 52 muss nicht so ausgeführt sein, dass jegliche Relativbewegung zwischen dem Verbindungskörper 23 aus dem Durchführungsteil 24 vermieden ist. Es ist ausreichend, die Relativbewegung derart zu begrenzen, dass der Ex-Spalt 34 nicht verkürzt wird, um die Zünddurchschlagssicherheit nicht zu beeinträchtigen.

Die Sicherungseinrichtung 52 ragt beispielsgemäß nicht über die Außenkontur des Durchführungsteils 24 hinaus. Sie ist im Bereich zwischen den beiden Wandflächen des Durchführungsteils 24 angeordnet sein, an denen die Durchführungsöffnung 48 jeweils ausmündet. Wie vorstehend anhand des Ausführungsbeispiels erläutert, erfolgt die axiale Sicherung des Verbindungskörpers 23 am Durchführungsteil 24 bzw. in der Durchführungsöffnung 48 allgemein gewindelos und nicht stoffschlüssig. Es ist eine lösbare und wiederherstellbare Verbindung bzw. Sicherung erreicht.

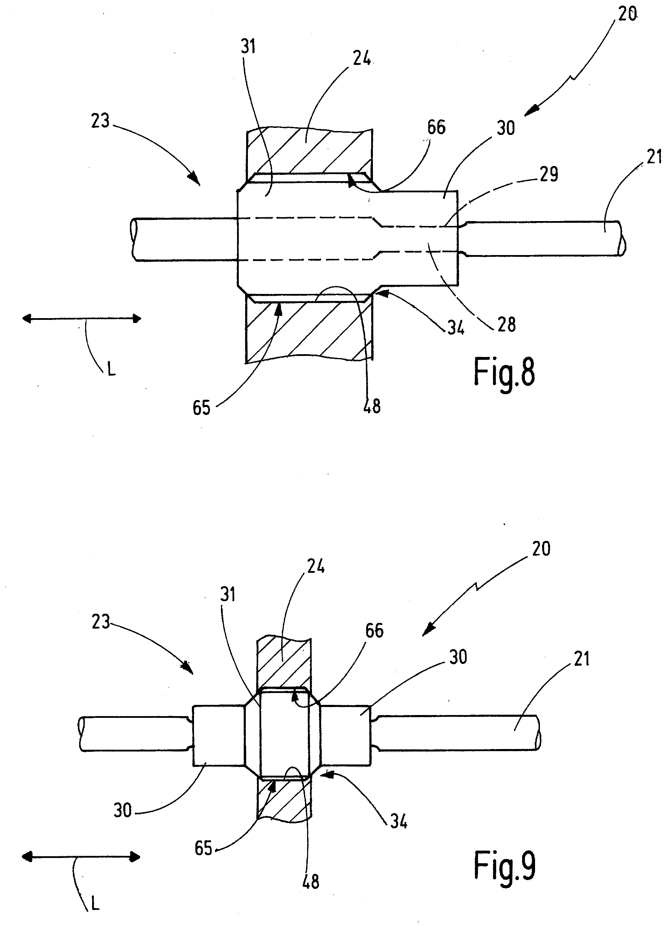

In den Fig. 8 und 9 sind schematisch weitere, nicht erfindungsgemäße Ausführungsvarianten der explosionsgeschützten Anordnung 20 stark vereinfacht dargestellt. Bei der bisher beschriebenen Ausführungsform sowie den Ausführungsbeispielen in den Figuren 9 und 11 sind die Begrenzungsflächen 32, 33 jeweils zylindrisch und vorzugsweise kreiszylindrisch. Sie sind als ebene Flächen ausgeführt, die bei den bevorzugten Ausführungsbeispielen kantenlos und ohne Vertiefungen bzw. Vorsprünge ausgeführt sind. In Abwandlung hierzu ist es auch möglich, an der ersten Begrenzungsfläche 32 ein Außengewinde 65 und an der zweiten Begrenzungsfläche 33 ein Innengewinde 66 vorzusehen. Bei dieser Ausführung wird der Verbindungskörper 23 mit dem Außengewinde 65 in das Innengewinde 66 des Durchführungsteils 24 geschraubt. Der Ex-Spalt 34 ist dabei als Gewindespalt ausgeführt. Diese Schraubverbindung stellt gleichzeitig eine Sicherung gegen eine ungewünschte Relativbewegung in Längsrichtung L dar. Die Sicherungseinrichtung 52 ist in diesem Fall durch die Gewinde 65, 66 gebildet.

Bei einigen bevorzugten Ausführungsbeispielen hat der Verbindungskörper 23 einen einzigen Verformungsabschnitt 30. In Fig. 9 ist ein alternatives Ausführungsbeispiel dargestellt, bei dem zwei Verformungsabschnitte 30 vorhanden sind. Der Verbindungsabschnitt 31 ist in Längsrichtung L zwischen den beiden Verformungsabschnitten 30 angeordnet. Bei der Herstellung der zünddurchschlagsicheren, kraftschlüssigen Verbindung zwischen dem Verbindungskörper 23 und der Leitungseinrichtung 21 kann durch dieses Ausführungsbeispiel eine Redundanz erreicht werden. Jede Verbindung zwischen einem Verbindungsabschnitt 30 und der Leitungseinrichtung 21 erfüllt für sich die Normanforderungen an die Zünddurchschlagsicherheit.

Bei den bisher beschriebenen Ausführungsformen ist der Verbindungskörper 23 durch plastisches Umformen eines Verformungsabschnitts 30 mit dem Anbringungsabschnitt 28 der Leitungseinrichtung 21 verbunden. Alternativ hierzu ist es auch möglich, den Verbindungskörper 23 durch einen Urformprozess herzustellen und dabei gleichzeitig mit der Leitungseinrichtung 21 zu verbinden. Beispielsweise kann der Verbindungskörper 23 an die Leitungseinrichtung 21 und insbesondere die Ummantelung 25 der Leitungseinrichtung 21 angeformt werden.

In den Figuren 10-15 ist ein Baukastensystem für eine explosionsgeschützte Anordnung 20 veranschaulicht. Ein Durchführungsteil 24 kann mehrere Durchführungsöffnungen 48 aufweisen. Vorzugsweise weisen diese Durchführungsöffnungen 48 zumindest teilweise unterschiedliche Querschnittsabmessungen bzw. beispielsgemäß unterschiedliche Durchmesser auf. Abhängig vom Querschnitt der durchzuführenden Leitungseinrichtung 21 kann eine ausreichend große Durchführungsöffnung 48 ausgewählt werden. Jeder Durchführungsöffnung 48 ist ein entsprechender Verbindungskörper 23 zugeordnet, der nach seiner plastischen Umformung der Abschnittsaußenfläche eine erste Begrenzungsfläche 32 aufweist, die an den jeweiligen Innendurchmesser der Durchführungsfläche 49 - die die zweite Begrenzungsfläche 33 bildet - angepasst ist, so dass beim Einstecken der Ex-Spalt 34 gebildet ist (Figuren 11-15).

Die axiale Sicherung der Verbindungskörper 23 kann wie in den Fig. 6 und 7 veranschaulicht durch die Sicherungseinrichtung 52 mit den beiden Axialsicherungen 50, 51 oder alternativ durch eine Gewindeverbindung gemäß der Fig. 8 und 9 erfolgen, was in den Prinzipdarstellungen der Fig. 10 bis 15 nicht veranschaulicht ist.

Es ist vorteilhaft, für eine Durchführungsöffnung 48 mit einem vorgegebenen Innendurchmesser mehrere Verbindungskörper 23 zur Verfügung zu stellen, die unterschiedlich viele Leitungskanäle 29 und/oder Leitungskanäle 29 mit unterschiedlich großen Innendurchmessern und/oder Querschnittskonturen aufweisen. Dadurch kann eine Vielzahl von Kombinationsmöglichkeiten erreicht werden, um die unterschiedlichsten Leitungseinrichtungen 21 durch eine vorhandene Durchführungsöffnung 48 zünddurchschlagssicher hindurch zu führen. Die Anzahl dieser Möglichkeiten wird weiter dadurch erhöht, dass - wie vorstehend beschrieben - mehrere Durchführungsöffnungen 48 vorhanden sein können, die unterschiedliche Innendurchmesser aufweisen können. So können beispielsweise Verbindungskörper 23 an die Durchführung von Standardleitungen bzw. Standardkabeln angepasst werden, indem sie einen oder mehrere Leitungskanäle 29 in entsprechender Anzahl bzw. Größe bereitstellen. Die Außenabmessungen des Verformungsabschnitts 31 vor dessen plastischer Umformung sind dabei so gewählt, dass abhängig von der Größe und Anzahl der Leitungskanäle 29 eine ausreichende Materialstärke für das plastische Umformen verbleibt. Die Größe der Durchführungsöffnungen 48 im Durchführungsteil 24 sind dann wiederum entsprechend an die Außenabmessung der ersten Begrenzungsfläche 32 angepasst. Dabei kann auch berücksichtigt werden, dass die Durchführungsöffnungen 48 mit Werkzeugen in Standardgröße (beispielsweise Bohrer, Fräser oder dergleichen) im Durchführungsteil 24 erzeugt werden können.

In den Figuren 13-15 ist zu erkennen, dass solche Durchführungsöffnungen 48 im Durchführungsteil 24, die nicht zur Durchführung einer Leitungseinrichtung 21 benötigt werden, zünddurchschlagsicher teilweise oder vollständig verschlossen sind, um den Explosionsschutz aufrecht zu erhalten. Das zündspaltfreie Verschließen einer Durchführungsöffnung 48, in der kein Verbindungskörper 23 angeordnet ist, erfolgt mit Hilfe eines Verschlussmittels 70. Als Verschlussmittel 70 dient beispielsgemäß ein Verschlussstopfen 71, der vorzugsweise aus elastisch verformbarem Material besteht und kraftschlüssig und/oder formschlüssig in der jeweils zugeordneten Durchgangsöffnung 48 angeordnet wird. Zusätzlich oder alternativ kann ein Verschlussmittel 70 auch stoffschlüssig in der jeweiligen Durchgangsöffnung 48 fixiert sein.

In den Fig. 10, 14 und 15 ist zu erkennen, dass für eine explosionsgeschützte Anordnung 20 auch mehrere miteinander verbundene bzw. verbindbare Durchführungsteile 24 verwendet werden können. Beispielsgemäß sind konzentrisch bzw. koaxial zueinander angeordnete Durchführungsteile 24 vorgesehen, die ineinander gesteckt werden können. Die Durchführungsteile 24 können kraftschlüssig und/oder formschlüssig und/oder stoffschlüssig miteinander verbunden werden, um sicherzustellen, dass zwischen zwei miteinander verbundenen Durchführungsteilen 24 kein Zündspalt verbleibt.

Beispielsgemäß sind die Durchführungsteile 24 kreisscheibenförmig oder ringförmig. Das radial innerste, erste Durchführungsteil 24a ist in Form einer Kreisscheibe ausgeführt. Ein kreisringförmiges zweites Durchführungsteil 24b ist koaxial zu dem ist Durchführungsteil 24a angeordnet und mit dem ersten Durchführungsteil 24a zünddurchschlagsicher verbunden. Beim Ausführungsbeispiel ist ein kreisringförmiges drittes Durchführungsteil 24c vorgesehen, das wiederum koaxial zu den beiden anderen Durchführungsteilen 24a, 24b angeordnet und zünddurchschlagssicher mit dem zweiten Durchführungsteil 24b verbunden ist. Die Anzahl der kreisringförmigen Durchführungsteile kann grundsätzlich beliebig gewählt werden.

Abhängig von der Anzahl bzw. der Größe der durchzuführenden Leitungseinrichtungen 21 werden ein oder mehrere passende Durchführungsteile 24 ausgewählt und - sofern mehrere Durchführungsteile 24 verwendet werden - miteinander verbunden, so dass sich eine zusammenhängende flächige Anordnung der Durchführungsteile 24 ergibt. In der Wand bzw. dem Wandabschnitt, wird eine entsprechende Aussparung hergestellt und die Durchführungsteile 24 werden darin angeordnet.

Durch diese Ausgestaltung können mit Hilfe des wenigstens einen Durchführungsteils 24 auch mehrere Leitungseinrichtungen 21 explosionsgeschützt durch eine Wand oder einen Wandabschnitt geführt werden, wobei es ausreicht, eine Aussparung in der Wand oder dem Wandabschnitt vorzusehen bzw. einzubringen.

Die Durchführungsteile 24 können aus Metall, einer Metalllegierung oder einem Kunststoffmaterial oder einem Verbundwerkstoff hergestellt werden. Bei einem Ausführungsbeispiel ist das wenigstens eine Durchführungsteil 24 als Gussteil, beispielsweise als Spritzgussteil ausgeführt.

Die Erfindung betrifft eine explosionsgeschützte Anordnung 20, die dazu eingerichtet ist, wenigstens eine Leitungseinrichtung 21 zünddurchschlagfrei durch eine Wand zu führen. Die Anordnung 20 weist wenigstens ein Durchführungsteil 24 mit einer oder mehreren Durchführungsöffnungen 48 auf, die in Umfangsrichtung jeweils durch eine Durchführungsfläche 49 begrenzt ist. Das wenigstens eine Durchführungsteil 24 ist zur Anordnung in der Wand eingerichtet. Jeder Leitungseinrichtung 21 ist ein Verbindungskörper 23 zugeordnet, der die Leitungseinrichtung 21 in einem Anbringungsabschnitt 28 unter Bildung einer zündspaltfreien Verbindung koaxial umschließt. Der Verbindungskörper 23 eine erste Begrenzungsfläche 32. Die Durchführungsfläche 49 stellt eine zweite Begrenzungsfläche 33 dar. Durch zumindest teilweise Einstecken des Verbindungskörpers 23 in die Durchführungsöffnung 48 wird zwischen den beiden Begrenzungsflächen 32, 33 ein zünddurchschlagsicherer Ex-Spalt 34 gebildet. Die Durchführungsöffnungen 48 des Durchführungsteils 24, in denen kein Verbindungskörper 23 zündspaltfrei angeordnet ist, sind durch ein Verschlussmittel 70 zünddurchschlagssicher verschlossen. Eine Sicherungseinrichtung 52 sichert den Verbindungskörper 23 in der Durchführungsöffnung 48.

### Bezugszeichenliste:

- 20: explosionsgeschützte Anordnung
- 21: Leitungseinrichtung
- 22: Leiter
- 23: Verbindungskörper
- 24: Durchführungsteil
- 24a: erstes Durchführungsteil
- 24b: zweites Durchführungsteil
- 24c: drittes Durchführungsteil
- 25: Ummantelung

- 28: Anbringungsabschnitt
- 29: Leitungskanal
- 30: Verformungsabschnitt
- 31: Verbindungsabschnitt
- 32: erste Begrenzungsfläche
- 33: zweite Begrenzungsfläche
- 34: Ex-Spalt

- 37: Walzwerkzeug
- 38: Werkzeugform
- 39: Umformkanal
- 40: erstes Ende des Umformkanals
- 41: Stempel
- 42: zweites Ende des Umformkanals
- 43: Fase
- 44: Stirnfläche

- 48: Durchführungsöffnung
- 49: Durchführungsfläche
- 50: erste Axialsicherung
- 51: zweite Axialsicherung
- 52: Sicherungseinrichtung
- 53: erster Anschlag
- 54: Loch
- 55: zweiter Anschlag
- 56: Sicherungsteil
- 57: Umfangsnut
- 58: Hülse

- 65: Außengewinde
- 66: Innengewinde

- 70: Verschlussmittel
- 71: Verschlussstopfen

- D: Drehachse
- F: Umformkraft
- L: Längsrichtung

## Patentansprüche

1. Explosionsgeschützte Anordnung (20)
mit wenigstens einem Durchführungsteil (24), das mehrere Durchführungsöffnungen (48) mit jeweils einer Durchführungsfläche (49) aufweist, und das integraler Bestandteil einer Wand ist oder als separates Bauteil durch eine Gewindeverbindung und/oder eine stoffschlüssige Verbindung zünddurchschlagsicher in der Wand angebracht ist,
mit wenigstens einem Verbindungskörper (23), der wenigstens einen sich in einer Längsrichtung (L) durch den Verbindungskörper (23) erstreckenden Leitungskanal (29) aufweist,
mit wenigstens einer Leitungseinrichtung (21), die sich mit einem Anbringungsabschnitt (28) durch den wenigstens einen Leitungskanal (29) erstreckt und wenigstens einen elektrischen und/oder optischen Leiter (22) aufweist,
wobei der wenigstens eine Verbindungskörper (23) zünddurchschlagsicher im Anbringungsabschnitt (28) mit der jeweils zugeordneten Leitungseinrichtung (21) verbunden ist,
wobei jeder Verbindungskörper (23) an seiner der Leitungseinrichtung (21) abgewandten Außenseite eine erste Begrenzungsfläche (32) aufweist, die mit einer durch die Durchführungsfläche (49) der Durchführungsöffnung (48) gebildeten zweite Begrenzungsfläche (33) einen zünddurchschlagsicheren Ex-Spalt (34) bildet,
wobei die erste Begrenzungsfläche (32) und die zweite Begrenzungsfläche (33) jeweils gewindefrei sind,
wobei der wenigstens eine Verbindungskörper (23) in eine der Durchführungsöffnungen (48) eingesetzt ist,
wobei wenigstens eine Sicherungseinrichtung (52) vorhanden ist, die dazu eingerichtet ist, eine gewindelose, lösbare und nicht stoffschlüssige Verbindung zwischen dem wenigstens einen Verbindungskörper (23) und dem Durchführungsteil (24) herzustellen, so dass einer Relativbewegung zwischen dem wenigstens einen Verbindungskörper (23) und dem Durchführungsteil (24) in Längsrichtung (L) begrenzt oder verhindert ist,
und wobei jede Durchführungsöffnung (48) des Durchführungsteils (24) entweder durch das Anordnen eines Verbindungskörpers (23) oder durch das Einbringen eines Verschlussmittels (70) zünddurchschlagsicher ausgeführt ist.

2. Explosionsgeschützte Anordnung nach Anspruch 1,
wobei die Leitungseinrichtung (21) zumindest entlang des Anbringungsabschnitts (28) eine insbesondere elektrisch isolierende Ummantelung (25) aufweist, an der der Verbindungskörper (24) unmittelbar und zündspaltfrei anliegt.

3. Explosionsgeschützte Anordnung nach Anspruch 1,
wobei die erste Begrenzungsfläche (32) den Anbringungsabschnitt (28) umschließt oder koaxial zu dem Anbringungsabschnitt (28) angeordnet ist, in dem die zünddurchschlagsichere Verbindung zwischen dem Verbindungskörper (23) und der Leitungseinrichtung (21) besteht.

4. Explosionsgeschützte Anordnung nach einem der vorhergehenden Ansprüche,
wobei die Anordnung (20) zur Leitungsdurchführung in einer druckfeste Kapselung (Exd) eingerichtet ist.

5. Explosionsgeschützte Anordnung nach einem der vorhergehenden Ansprüche ,
wobei der zünddurchschlagsichere Ex-Spalt (34) als Luftspalt ausgeführt ist.

6. Explosionsgeschützte Anordnung nach einem der vorhergehenden Ansprüche,
wobei die erste Begrenzungsfläche (32) und die zweite Begrenzungsfläche (33) im Querschnitt jeweils eine eckenlose, gekrümmte Kontur aufweisen.

7. Explosionsgeschützte Anordnung nach einem der vorhergehenden Ansprüche,
wobei der wenigstens eine Verbindungskörper (23) aus einem plastisch verformbaren Material besteht und durch plastische Umformung eines Verformungsabschnitts (30) nach innen auf die Leitungseinrichtung (21) drückt und dadurch kraftschlüssig mit der Leitungseinrichtung (21) verbunden ist.

8. Explosionsgeschützte Anordnung nach einem der vorhergehenden Ansprüche,
wobei der wenigstens eine Verbindungskörper (23) an zumindest einem axialen Ende eine Fase (43) aufweist.

9. Explosionsgeschützte Anordnung nach einem der vorhergehenden Ansprüche,
wobei die wenigstens eine Sicherungseinrichtung (52) in der Durchführungsöffnung (48) angeordnet ist.

10. Explosionsgeschützte Anordnung nach einem der vorhergehenden Ansprüche,
wobei die wenigstens eine Sicherungseinrichtung (52) zumindest teilweise integraler Bestandteil des Durchführungsteils (24) ist.

11. Explosionsgeschützte Anordnung nach einem der vorhergehenden Ansprüche,
wobei die Sicherungseinrichtung (52) eine erste Axialsicherung (50) und eine zweite Axialsicherung (51) aufweist, die in Längsrichtung (L) mit Abstand zueinander angeordnet sind und zwischen denen zumindest ein Abschnitt (30, 31) des zugeordneten Verbindungskörpers (23) angeordnet ist.

12. Explosionsgeschützte Anordnung nach einem der vorhergehenden Ansprüche,
wobei die erste Axialsicherung (50) und/oder die zweite Axialsicherung (51) wenigstens ein radial von der Längsachse der Durchführungsöffnung (48) weg gegen eine Vorspannkraft bewegbares oder verformbares Sicherungsteil (56) aufweist.

13. Explosionsgeschützte Anordnung nach einem der vorhergehenden Ansprüche,
wobei die erste Axialsicherung (50) und/oder die zweite Axialsicherung (51) einen radial zur Längsachse der Durchführungsöffnung (48) starren Axialanschlag (53) aufweist.

14. Explosionsgeschützte Anordnung nach einem der vorhergehenden Ansprüche,
wobei mehrere miteinander verbundene oder verbindbare Durchführungsteile (24a, 24b, 24c) vorhanden sind.

15. Explosionsgeschützte Anordnung nach einem der vorhergehenden Ansprüche,
wobei zumindest einige der Durchführungsöffnungen (48) unterschiedlich große Öffnungsquerschnitte aufweisen.

16. Explosionsgeschützte Anordnung nach einem der vorhergehenden Ansprüche,
wobei für eine Durchführungsöffnung (48) mit einem vorgegebenen Öffnungsquerschnitt mehrere zugeordnete Verbindungskörper (23) bereitgestellt sind, wobei sich der wenigstens eine Leitungskanal (29) eines zugeordnete Verbindungskörpers (29) von dem wenigstens einen Leitungskanal (29) anderer zugeordneter Verbindungskörper (23) unterscheidet.

17. Verfahren zur Herstellung einer explosionsgeschützten Anordnung (20) nach einem der vorhergehenden Ansprüche, mit folgenden Schritten:
- Bereitstellen wenigstens eines Durchführungsteils (24), das mehrere Durchführungsöffnungen (48) mit jeweils einer Durchführungsfläche (49) aufweist, und das integraler Bestandteil einer Wand ist oder als separates Bauteil zünddurchschlagsicher durch eine Gewindeverbindung und/oder eine stoffschlüssige Verbindung in der Wand angebracht wird,
- Bereitstellen wenigstens einer Leitungseinrichtung (21) mit jeweils wenigstens einem elektrischen und/oder optischen Leiter (22),
- zünddurchschlagsicheres Verbinden wenigstens eines Verbindungskörpers (23) mit der wenigstens einen Leitungseinrichtung (21), wobei jeder Verbindungskörper (23) an seiner der Leitungseinrichtung (21) abgewandten Außenseite eine erste Begrenzungsfläche (32) aufweist, wobei die erste Begrenzungsfläche (32) und die zweite Begrenzungsfläche (33) jeweils gewindefrei sind,
- Anordnen des wenigstens einen Verbindungskörpers (23) in jeweils einer der Durchführungsöffnungen (48), so dass die erste Begrenzungsfläche (32) jedes Verbindungskörpers (23) mit einer von der Durchführungsfläche (49) der zugeordneten Durchführungsöffnung (48) gebildeten zweiten Begrenzungsfläche (33) einen zünddurchschlagsicheren Ex-Spalt (34) bildet, wobei mittels wenigstens einer Sicherungseinrichtung (52) eine gewindelose, lösbare und nicht stoffschlüssige Verbindung zwischen dem wenigstens einen Verbindungskörper (23) und dem Durchführungsteil (24) hergestellt wird, so dass einer Relativbewegung zwischen dem wenigstens einen Verbindungskörper (23) und dem Durchführungsteil (24) in Längsrichtung (L) begrenzt oder verhindert ist,
- wobei jede Durchführungsöffnung (48) des wenigstens einen Durchführungsteils (24) entweder durch das Anordnen eines Verbindungskörpers (23) oder durch das Einbringen eines Verschlussmittels (70) zünddurchschlagsicher ausgeführt ist.

## Claims

1. Explosion-proof assembly (20)
having at least one bushing part (24) that comprises multiple bushing openings (48) with one bushing surface (49) in each case, and that is integral part of a wall or that is attached in the wall as separate component in a flameproof manner by means of a threaded connection and/or a substance bond connection,
having at least one connecting body (23), which has at least one conductor channel (29) extending through the connecting body (23) in a longitudinal direction (L),
having at least one conductor device (21), which extends with a mounting portion (28) through the at least one conductor channel (29) and has at least one electrical and/or optical conductor (22),
wherein the at least one connecting body (23) is connected in a flameproof manner in the mounting portion (28) to the respective assigned conductor device (21),
wherein each connecting body (23) has a first delimiting surface (32) on its outer side facing away from the conductor device (21), the first delimiting surface (32) forming a flameproof Ex-gap (34) together with a second delimiting surface (33), which is formed by the bushing surface (49) of the bushing opening (48),
wherein the first delimiting surface (32) and the second delimiting surface (33) are free of threads respectively,
wherein the at least one connecting body (23) is inserted into one of the bushing openings (48),
wherein at least one securing device (52) is provided, which is configured to establish an unthreaded, releasable and non-substance bonded connection between the at least one connecting body (23) and the bushing part (24) so that a relative movement between the at least one connecting body (23) and the bushing part (24) in the longitudinal direction (L) is limited or prevented,
and wherein each bushing opening (48) of the bushing part (24) is made flameproof either by arrangement of a connecting body (23) or by insertion of a closure means (70) .

2. Explosion-proof assembly according to claim 1, wherein the conductor device (21) has at least along the mounting portion (28) a sheathing (25) that is in particular electrically insulating and against which the connecting body (24) abuts directly and without flame gap.

3. Explosion-proof assembly according to claim 1, wherein the first delimiting surface (32) surrounds the mounting portion (28) or is coaxially arranged around the mounting portion (28) in which the flameproof connection between the connecting body (23) and the conductor device (21) is established.

4. Explosion-proof assembly according to one of the preceding claims, wherein the assembly (20) is configured for guide-through of conductors into a flameproof enclosure (Ex-d) .

5. Explosion-proof assembly according to any of the preceding claims, wherein the flameproof Ex-gap (34) is realized as air gap.

6. Explosion-proof assembly according to any of the preceding claims, wherein the first delimiting surface (32) and the second delimiting surface (33) each have a curved contour without corners in the cross-section.

7. Explosion-proof assembly according to any of the preceding claims, wherein the at least one connecting body (23) is made of a plastically deformable material and presses inwardly onto the conductor device (21) due to plastic deformation and is thereby connected with the conductor device (21) in a force-fit manner.

8. Explosion-proof assembly according to any of the preceding claims, wherein the at least one connecting body (23) has a chamfer (43) at least at one axial end.

9. Explosion-proof assembly according to any of the preceding claims, wherein the at least one securing device (52) is arranged inside the bushing opening (48).

10. Explosion-proof assembly according to any of the preceding claims, wherein the at least one securing device (52) is at least partly an integral part of the bushing part (24).

11. Explosion-proof assembly according to any of the preceding claims, wherein the securing device (52) has a first axial securing means (50) and a second axial securing means (51), which are arranged at a distance from one another in the longitudinal direction (L) and between which at least one portion (30, 31) of the associated connecting body (23) is arranged.

12. Explosion-proof assembly according to any of the preceding claims, wherein the first axial securing means (50) and/or the second axial securing means (51) has at least one securing part (56) that can be moved or deformed radially away from the longitudinal axis of the bushing opening (48) against a pretension force.

13. Explosion-proof assembly according to any of the preceding claims, wherein the first axial securing means (50) and/or the second axial securing means (51) has an axial stop (53), which is rigid radially to the longitudinal axis of the bushing opening (48).

14. Explosion-proof assembly according to any of the preceding claims, wherein a plurality of bushing parts (24a, 24b, 24c) are provided, which are connected or connectable to one another.

15. Explosion-proof assembly according to any of the preceding claims, wherein at least some of the bushing openings (48) have opening cross-sections of different size.

16. Explosion-proof assembly according to any of the preceding claims, wherein a plurality of assigned connecting bodies (23) are provided for one bushing opening (48) having a predefined opening cross-section, wherein the at least one conductor channel (29) of an associated connecting body (29) differs from the at least one conductor channel (29) of other assigned connecting bodies (23) .

17. Method for producing an explosion-proof assembly (20) according to any of the preceding claims comprising the following steps:
- providing at least one bushing part (24) having multiple bushing openings (48) with bushing surface (49) in each case and which is integral part of a wall or is attached to the wall as separate component in a flameproof manner by means of a threaded connection and/or a substance bond connection,
- providing at least one conductor device (21) having at least one electrical and/or optical conductor (21) respectively,
- connecting in a flameproof manner at least one connecting body (23) to the at least one conductor device (21), wherein each connecting body (23) has a first delimiting surface (32) on its outer side facing away from the conductor device (21), wherein the first delimiting surface (32) and the second delimiting surface (33) are free of threads respectively,
- arranging the at least one connecting body (23) in one of the bushing openings (48) respectively, so that the first delimiting surface (32) of each connecting body (23) forms a flameproof Ex-gap (34) together with the second delimiting surface (33) formed by the bushing surface (49) of the assigned bushing opening (48), wherein an unthreaded, releasable and non-substance bond connection is established between the at least one connecting body (23) and the bushing part (24) by means of at least one securing device (52), so that a relative movement between the at least one connecting body (23) and the bushing part (24) in longitudinal direction (L) is limited or prevented,
- wherein each bushing opening (48) of the at least one bushing part (24) is realized in a flameproof manner either by arrangement of a connecting body (23) or by the insertion of a closure means (70).

## Revendications

1. Dispositif antidéflagrant (20),
comprenant au moins un élément de passage (24) qui présente plusieurs ouvertures de passage (48), comportant chacune une surface de passage (49), et qui fait partie intégrante d'une paroi ou est monté de manière antidéflagrante dans la paroi en tant qu'élément distinct, par le biais d'une liaison filetée et/ou d'une liaison par matière,
comprenant au moins un corps de raccordement (23) qui présente au moins un conduit (29) s'étendant dans une direction longitudinale (L) dans le corps de raccordement (23),
comprenant au moins un dispositif de câble (21) qui s'étend avec une partie de montage (28) dans le conduit (29), au nombre d'au moins un, et présente au moins un conducteur électrique et/ou optique (22),
dans lequel le corps de raccordement (23), au nombre d'au moins un, est relié dans la partie de montage (28) de manière antidéflagrante au dispositif de câble (21) respectif associé,
dans lequel chaque corps de raccordement (23), sur sa face extérieure éloignée du dispositif de câble (21), présente une première surface de délimitation (32) qui forme un joint antidéflagrant résistant au claquage (34) avec une deuxième surface de délimitation (33) constituée de la surface de passage (49) de l'ouverture de passage (48),
dans lequel la première surface de délimitation (32) et la deuxième surface de délimitation (33) sont chacune dépourvues de filetages,
dans lequel le corps de raccordement (23), au nombre d'au moins un, est inséré dans l'une des ouvertures de passage (48),
dans lequel il est prévu au moins un dispositif de blocage (52) qui est conçu pour établir une liaison amovible, sans filetage ni assemblage par matière, entre le corps de raccordement (23), au nombre d'au moins un, et l'élément de passage (24), de sorte qu'un mouvement relatif entre le corps de raccordement (23), au nombre d'au moins un, et l'élément de passage (24) est limité ou empêché dans la direction longitudinale (L),
et dans lequel chaque ouverture de passage (48) de l'élément de passage (24) est réalisée de manière antidéflagrante, soit par la mise en place d'un corps de raccordement (23), soit par l'insertion d'un moyen d'obturation (70).

2. Dispositif antidéflagrant selon la revendication 1,
dans lequel le dispositif de câble (21) présente, au moins le long de la partie de montage (28), une gaine (25) isolante notamment sur le plan électrique, contre laquelle le corps de raccordement (24) est appliqué directement et sans interstice explosible.

3. Dispositif antidéflagrant selon la revendication 1,
dans lequel la première surface de délimitation (32) entoure la partie de montage (28) ou est disposée de façon coaxiale avec la partie de montage (28) dans laquelle est présente la liaison antidéflagrante entre le corps de raccordement (23) et le dispositif de câble (21).

4. Dispositif antidéflagrant selon l'une des revendications précédentes,
dans lequel le dispositif (20) pour le passage de câble est réalisé dans une enveloppe antidéflagrante (Ex-d).

5. Dispositif antidéflagrant selon l'une des revendications précédentes,
dans lequel le joint antidéflagrant résistant au claquage (34) est réalisé sous forme d'espace d'air.

6. Dispositif antidéflagrant selon l'une des revendications précédentes,
dans lequel la première surface de délimitation (32) et la deuxième surface de délimitation (33) présentent chacune en section transversale un contour incurvé dépourvu d'angles.

7. Dispositif antidéflagrant selon l'une des revendications précédentes,
dans lequel le corps de raccordement (23), au nombre d'au moins un, est constitué d'un matériau plastiquement déformable et, par déformation plastique d'une portion déformable (30), appuie vers l'intérieur, sur le dispositif de câble (21), et est de ce fait relié par adhérence au dispositif de câble (21).

8. Dispositif antidéflagrant selon l'une des revendications précédentes,
dans lequel le corps de raccordement (23), au nombre d'au moins un, présente un chanfrein (43) à au moins une extrémité axiale.

9. Dispositif antidéflagrant selon l'une des revendications précédentes,
dans lequel le dispositif de blocage (52), au nombre d'au moins un, est placé dans l'ouverture de passage (48).

10. Dispositif antidéflagrant selon l'une des revendications précédentes,
dans lequel le dispositif de blocage (52), au nombre d'au moins un, fait partie intégrante de l'élément de passage (24), au moins par portions.

11. Dispositif antidéflagrant selon l'une des revendications précédentes,
dans lequel le dispositif de blocage (52) présente un premier moyen de blocage axial (50) et un deuxième moyen de blocage axial (51), qui sont placés à distance l'une de l'autre dans la direction longitudinale (L) et entre lesquels est disposée au moins une portion (30, 31) du corps de raccordement (23) associé.

12. Dispositif antidéflagrant selon l'une des revendications précédentes,
dans lequel le premier moyen de blocage axial (50) et/ou le deuxième moyen de blocage axial (51) présente au moins élément de blocage (56) pouvant être déplacé ou déformé à l'encontre d'une force de précontrainte, en s'éloignant radialement de l'axe longitudinal de l'ouverture de passage (48).

13. Dispositif antidéflagrant selon l'une des revendications précédentes,
dans lequel le premier moyen de blocage axial (50) et/ou le deuxième moyen de blocage axial (51) présente une butée axiale (53) qui est rigide dans le sens radial par rapport à l'axe longitudinal de l'ouverture de passage (48).

14. Dispositif antidéflagrant selon l'une des revendications précédentes,
dans lequel sont prévus plusieurs éléments de passage (24a, 24b, 24c) reliés ou susceptibles d'être reliés les uns aux autres.

15. Dispositif antidéflagrant selon l'une des revendications précédentes,
dans lequel au moins quelques-unes des ouvertures de passage (48) présentent des sections d'ouverture de dimensions différentes.

16. Dispositif antidéflagrant selon l'une des revendications précédentes,
dans lequel plusieurs corps de raccordement (23) associés sont mis à disposition pour une ouverture de passage (48) ayant une section d'ouverture prédéfinie, le conduit (29), au nombre d'au moins un, d'un corps de raccordement (23) associé se distinguant du conduit (29), au nombre d'au moins un, d'autres corps de raccordement (23) associés.

17. Procédé de fabrication d'un dispositif antidéflagrant (20) selon l'une des revendications précédentes, comprenant les étapes suivantes :
- mise à disposition d'au moins un élément de passage (24) qui présente plusieurs ouvertures de passage (48) comportant chacune une surface de passage (49), et qui fait partie intégrante d'une paroi ou est monté de manière antidéflagrante dans la paroi en tant qu'élément distinct, par le biais d'une liaison filetée et/ou d'une liaison par matière,
- mise à disposition d'au moins un dispositif de câble (21) comportant respectivement au moins un conducteur électrique et/ou optique (22),
- liaison antidéflagrante d'au moins un corps de raccordement (23) au dispositif de câble (21), au nombre d'au moins un, où chaque corps de raccordement (23), sur sa face extérieure détournée du dispositif de câble (21), présente une première surface de délimitation (32), la première surface de délimitation (32) et la deuxième surface de délimitation (33) étant chacune dépourvues de filetages,
- mise en place du corps de raccordement (23), au nombre d'au moins un, respectivement dans l'une des ouvertures de passage (48), de sorte que la première surface de délimitation (32) de chaque corps de raccordement (23) forme avec une deuxième surface de délimitation (33), constituée de la surface de passage (49) de l'ouverture de passage (48) associée, un joint antidéflagrant résistant au claquage (34), sachant qu'une liaison amovible, sans filetage ni assemblage par matière, entre le corps de raccordement (23), au nombre d'au moins un, et l'élément de passage (24) est établie à l'aide d'au moins un dispositif de blocage (52), de sorte qu'un mouvement relatif entre le corps de raccordement (23), au nombre d'au moins un, et l'élément de passage (24) est limité ou empêché dans la direction longitudinale (L),
- chaque ouverture de passage (48) de l'élément de passage (24), au nombre d'au moins un, étant réalisée de manière antidéflagrante, soit par mise en place d'un corps de raccordement (23), soit par insertion d'un moyen d'obturation (70).
